# EUROPEAN PATENT APPLICATION

(11) **EP 1 987 715 A1**
(43) Date of publication of application: **05.11.2008**
(21) Application number: 08103754.1
(22) Date of filing: 29.04.2008
(51) Int. Cl.: A01K 73/045, A01K 73/02

(54) **Adjustment of Trawl Doors**

(30) Priority: 02.05.2007 DK 200700660
(71) Applicant: Injector Trawldoors A/S, 8700 Horsens (DK)
(72) Inventor: Larsen, Helge, 8700, Horsens (DK)
(74) Representative: Gregersen, Niels Henrik

(57) **Abstract**

The invention comprises a method for depth adjustment of trawl and trawl doors (202) primarily for trawl fishing, where the trawl doors together with a trawl are towed after at least one vessel, where the trawl doors generate an outwards pull on the trawl relative to the direction of movement of the vessel, whereby the trawl remains open, where the trawl doors contain a first set of connecting means (16) for fastening at least one towing wire which is connected with the vessel, where the trawl doors contain a second set of connecting means (220) for fastening at least one wire drawing the trawl. It is the object of the invention to enable depth adjustment of trawl by adjusting trawl doors at the side facing the ship. This object can be fulfilled if the second set of connecting means of the trawl doors interacts with a fitting (222), where the fitting has at least a first and a second position, where the fitting is moved from the first to the second position at the inner side of the trawl doors. In that the trawl doors may be adjusted at the inner side it may be achieved that the trawl doors can be hoisted up e.g. at the stem of a ship with the inner side facing the ship. Adjusting the depth of the trawl may thereby be effected by a relatively simple movement of a fitting. During use of the trawl door, the fitting is of course to be fastened, but a solution with one or more bolts (228,244) will enable adjustment between several positions. Thus it becomes possible to perform a very rapid resetting of the depth of the trawl which thereby may be adapted more easily to e.g. shoals of fishes at different depths.

## Description

### Field of the Invention

The invention comprises a method for depth adjustment of trawl and trawl doors primarily for trawl fishing, where the trawl doors together with a trawl are towed after at least one vessel, where the trawl doors generate an outwards pull on the trawl relative to the direction of movement of the vessel, whereby the trawl remains open, where the trawl doors contain a first set of connecting means for fastening at least one towing wire which is connected with the vessel, where the trawl doors contain a second set of connecting means for fastening at least one wire drawing the trawl.

### Background of the Invention

WO 97/40665 describes a trawl door of about the type encompassed by the patent application. The trawl doors in the WO document are intended for being drawn after a vessel in pairs, where the function of the trawl doors is to keep the trawl open by generating an outwards force relative to the towing direction of the vessel and at the same time ensure correct depth of the trawl. The setting of the depth may be performed by displacing the point of attachment for the wires in direction towards the trawl or in direction towards the vessel, respectively, as the trawl door has various options for attachment.

A drawback by the trawl doors is that adjustment of the trawl door and thereby the depth of the trawl is to occur at the outer side of the trawl door, whereby this is made cumbersome, since the trawl doors are of considerable size. In many cases, replacement is only possible in the water while the trawl door is towed at the surface close to the ship, or in an external boatswain's chair, where a seaman is lowered down at the outer side of the trawl door. Adjustment is thus made difficult and will be almost impossible to perform in e.g. rough weather in the North Sea.

### Object of the Invention

It is the object of the invention to enable depth adjustment of trawl by adjusting trawl doors at the side facing the ship.

### Description of the Invention

This object can be fulfilled by means of trawls doors as specified in the preamble of claim 1 if the second set of connecting means of the trawl doors interacts with a fitting, where the fitting has at least a first and a second position, where the fitting is moved from the first to the second position from the inner side of the trawl doors.

In that the trawl doors may be adjusted at the inner side, it may be achieved that the trawl doors can be hoisted up, e.g. at the stern of a ship, with the inner side facing the ship. Adjusting the depth of the trawl may thereby be effected by a relatively simple movement of a fitting. During use of the trawl door, the fitting is of course to be secured, but a solution with one or more bolts will enable adjustment between several positions. Thus it becomes possible to perform a very rapid resetting of the depth for the trawl which thereby may be adapted more easily to e.g. shoal of fishes at different depths. The rapid resetting means that as soon as a fish shoal has been caught at a certain depth, it is now possible to readjust the trawl, maybe even without emptying the trawl at first, to a new depth and to perform a new haul with the trawl, now for a another shoal going at another depth.

Advantageously, the fitting may be fastened to at least one side plate by a first bolt, where the fitting rotates about the centre of the first bolt. By applying a fitting which may be turned around a bolt, there is achieved a relatively simple possibility of adjusting the fitting.

The fitting may contain the second set of connecting means for fastening at least one wire, where an eyelet for fastening a wire is secured to the fitting by a second bolt. By the fitting which may be moved between different positions, it is expedient if an eyelet to which the wires may be fastened is provided directly at the fitting. Thereby it becomes possible to move the active point of attack for the wire in a very simple way by turning the fitting.

The fitting may similarly contain at least one fitting aperture, the fitting aperture having a first defined spacing or distance from the centre of the first bolt, where the side plate contains at least one side plate hole which has the first defined spacing to the centre of the first bolt, where a third bolt locks the fitting to the side plate. By using mutually fitting apertures, a very precise adjustment of the fitting can be achieved.

Thus it becomes possible that the fitting maybe only has a single aperture, while the side plate has a plurality of apertures. The reverse situation may be the case where the side plate only has a single aperture or hole, while the fitting has a number of different apertures or holes. Common to all holes is that they lie on an arc of a circle with the same distance to a common centre defined by the first bolt. By a possible embodiment of the invention, it may be envisaged with a far greater number of apertures in fitting and side plate, respectively. The apertures may still interact even though they have different spacing in relation to the centre, if only the correct distance is present, being the same for a single pair of apertures. Thus it will be possible with relatively few apertures, however with different spacing, in order to attain a large number of different setting options.

The fitting may include a number of fitting apertures that all have the same spacing to the centre of the first bolt. All apertures belonging to the same series may advantageously have the same spacing to the centre of the bolt, but there may be several rows of holes so that there are several distances to the bolt centre.

The side plate may include a number of side plate apertures that all have the same spacing to the centre of the first bolt. As already mentioned, it is an advantage if side plates and fittings have apertures which have the same spacing relative to the bolt centre. However, by various embodiments it will be possible also to have side plates with a greater number of apertures, where the holes have different spacing relative to the centre.

Advantageously, the fitting may be disposed between two side plates. By disposing the fitting between two side plates there is also attained substantially more force and even greater strength of the bolts securing the position of the fitting during operation.

The fitting may advantageously contain a handle. Adjusting the fitting may be eased considerably if the fitting is connected with a handle which possibly may be connected with a rod, so that a greater torque is effectively attained when the fitting is to be adjusted.

The invention also comprises a method for depth adjustment of trawl, where trawl doors together with a trawl are towed after at least one vessel, where the trawl doors generate an outwards pull on the trawl relative to the direction of movement of the vessel, whereby the trawl remains open, where the trawl doors contain a first set of connecting means for fastening at least one towing wire which is connected with the vessel, where the trawl doors contain a second set of connecting means for fastening at least one wire hauling the trawl, wherein the trawl doors are designed with means for adjusting the depth of the trawl, where adjustment of depth is performed at the inner side of the trawl doors. Hereby may be achieved an efficient and rapid resetting of the depth of a trawl.

### Description of the Drawing

Fig. 1 and Fig. 2 show a first possible embodiment of a trawl door.
Fig. 3 shows a fitting which is disassembled.
Fig. 4 shows a detail of a trawl door.
Fig. 5 shows the same embodiment as Fig. 4, where the fitting has been moved to another position.

### Detailed Description of the Invention

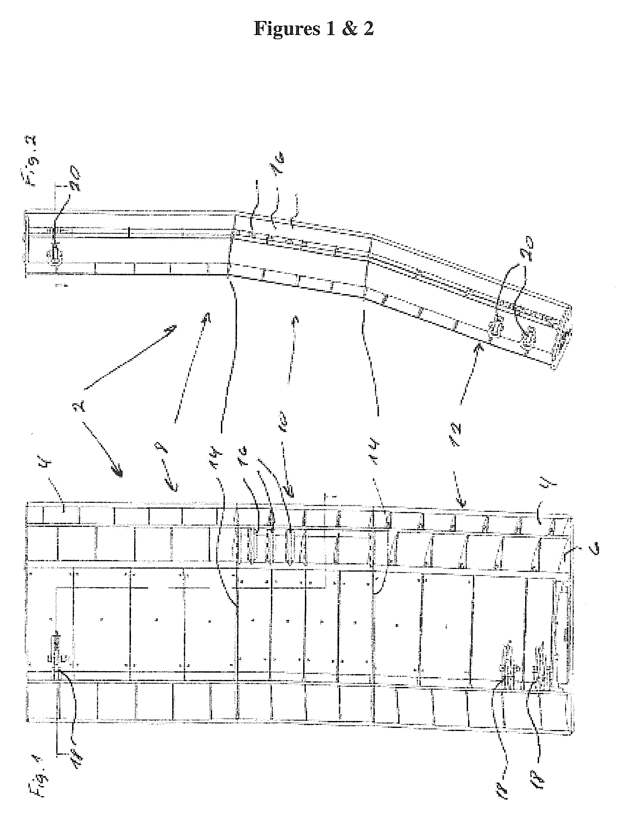

Fig. 1 and Fig. 2 show a first possible embodiment of a trawl door 2 according to the invention. The trawl door 2 contains inlet ducts 4 in a first row and inlet ducts 6 in a second row. The trawl door 2 is divided into sections with a slight angle there between, where a first upper section 8 is connected with angular displacement with the middle section of the trawl door 10, which in turn is connected by a slight turn to the lower part of the trawl door 12. Fastening clamps 16 are shown at the middle of the trawl door, e.g. intended for attaching wires for towing by a vessel. Baffle plates 14 are provided between the sections, the plates 14 simultaneously acting as actual reinforcement of the trawl door. At the top and bottom of the trawl door, fittings 18 are shown, which on Fig. 2 are viewed from the opposite side, here provided with reference number 20.

In practice, if the side of the trawl door shown on the Figures faces a vessel, the fittings 18 together with the top of the fittings 20 will enable performing adjustment of the point of fastening of the wires hauling the trawl, so that the level of the trawl door in the water will be adjusted to another value thereby. This adjustment thus becomes possible directly from the deck of the ship instead of the adjustment being performed e.g. in a boatswain's chair outwards of the side of the ship or be performed by a diver in the water at the side of the ship.

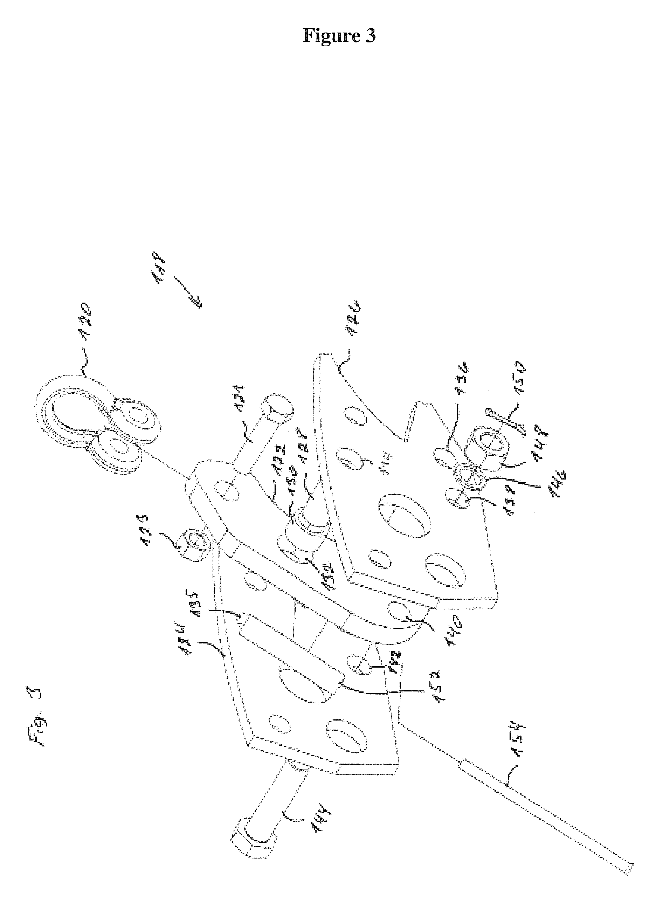

Fig. 3 shows a fitting 118 separated so that the individual components appear. At the top, the fitting 118 has an eyelet 120 which via a bolt 121 and a nut 123 is fastened to the fitting 122. The fitting 122 is disposed between two side plates 124 and 126. The fitting 122 is secured by means of a bolt 128 which via a bushing 130 is fastened in a hole 132 in the fitting 122. After insertion, the bolt 128 will also go through the hole 135 shown in the side plate 124. The side plate 126 also has two fastening apertures 136 and 138. The hole 138 interacts with an aperture 140 in the fitting 122 and further with an aperture 142 disposed in the fitting 124, where a bolt 144 goes through the hole 142, the aperture 140 in the fitting and the hole 138 in the second side plate 126, where a nut 148 together with a washer 146 and a split 150 are used for fixing the fitting 122 in the desired position. The fitting 122 is connected with a pipe 152 that may interact with a handle 154, whereby the fitting 122 may be turned more easily when the position is to be changed.

This change of position may occur by dismounting the bolt 144, turning the fitting 122 and aligning another aperture, maybe a not shown aperture with the same diameter as 140, with e.g. hole 136, whereafter the bolt 144 is mounted in the other position. The fitting 126 and the fitting 124 may contain more than the holes shown here, and there may be additional rows of holes that interact with corresponding additional rows of holes in the fitting. Thereby it becomes possible to set the fitting 122 at a large number of different positions.

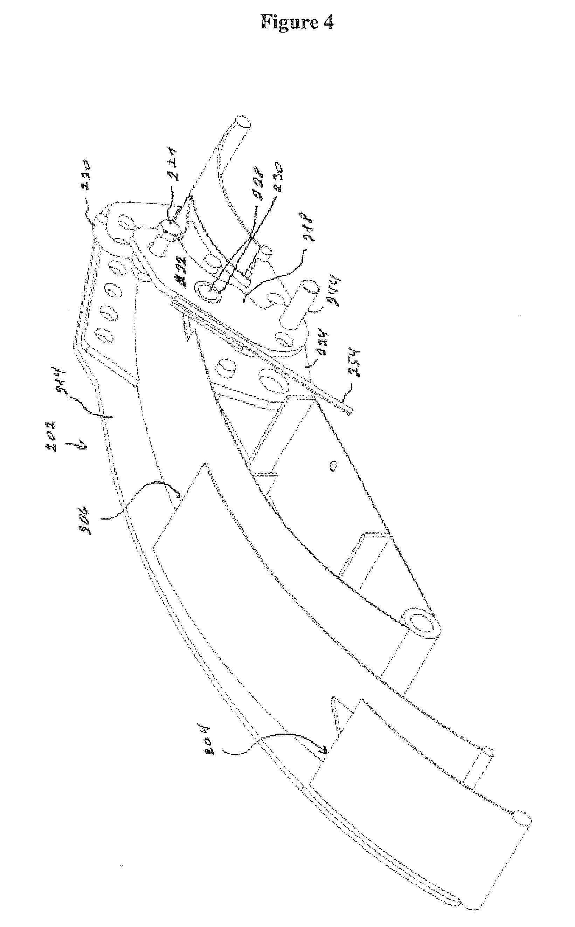

Fig. 4 shows a detailed section of a trawl door 202 which has inlet ducts 204 and 206 for water, while an eyelet, shown in section 220, is used for fastening a wire. Only one side plate 224 is shown on this Figure, however, it may be seen clearly that the fitting 218 is fitted on a bolt 228 by means of a bushing 230. The fitting is placed in correct position by means of the bolt 244 that interacts with a corresponding hole in the side plate 224. By means of a handle 254 it will be possible to turn the fitting 222 between different positions if the bolt 244 is dismounted.

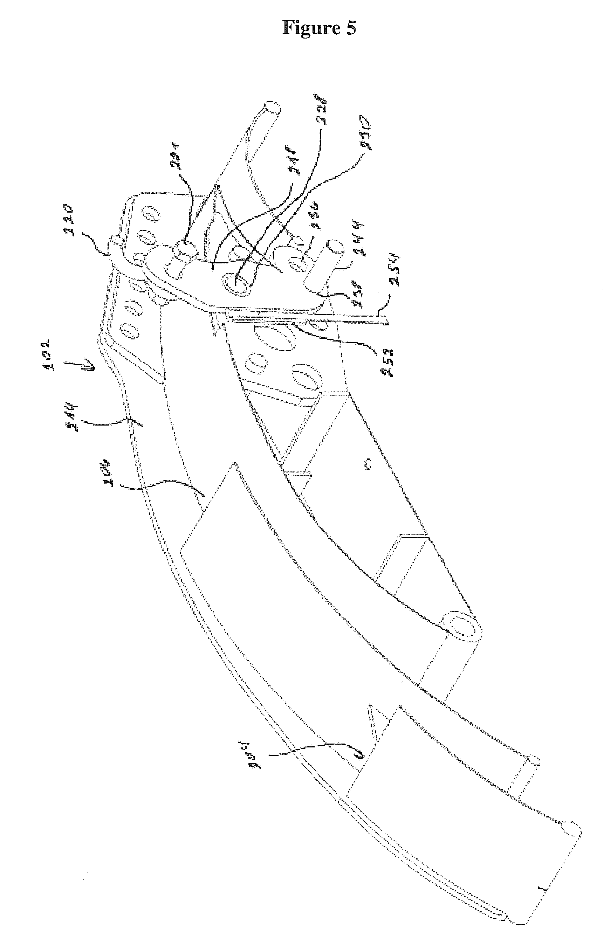

Fig. 5 shows the same embodiment as Fig. 4, and therefore the drawing is not explained in further detail, except that the fitting 218 is here moved to another position so that the active angle of pulling for the eyelet 220 has been moved. This moving of the active angle of pulling will mean a change of the depth of the trawl towed after the vessel.

## Claims

1. Trawl doors (2,202), primarily for trawl fishing, where the trawl doors (2,202) together with a trawl are towed after at least one vessel, where the trawl doors (2,202) generate an outwards pull on the trawl relative to the direction of movement of the vessel, whereby the trawl remains open, where the trawl doors (2,202) contain a first set of connecting means (16) for fastening at least one towing wire which is connected with the vessel, where the trawl doors (2,202) contain a second set of connecting means (20,120,220) for fastening at least one wire drawing the trawl, **characterised in that** the second set of connecting means (20,120,220) of the trawl doors (2,202) interacts with a fitting (18,118,218), where the fitting (18,118,218) has at least a first and a second position, where the fitting (18,118,218) is moved from the first to the second position from the inner side of the trawl doors (2,202).

2. Trawl doors according to claim 1, **characterised in that** the fitting (18,118,218) is fastened to at least one side plate (124,126) by a first bolt (128,218), where the fitting (18,118,218) rotates about the centre of the first bolt (128,218).

3. Trawl doors according to claim 1 or 2, **characterised in that** the fitting (18,118,218) contains the second set of connecting means (20,120,220) for fastening at least one wire, where an eyelet (20,120,220) for fastening a wire is secured to the fitting (18,118,218) by a second bolt (121,212).

4. Trawl doors according to one of claims 1-3, **characterised in that** the fitting (18,118,218) contains at least one fitting aperture (140), the fitting aperture (140) having a first defined spacing from the centre of the first bolt (128,218), where the side plate (124, 126) contains at least one side plate hole (136,138,142) which has the first defined spacing to the centre of the first bolt (128,218), where a third bolt (144,244) locks the fitting (18,118,218) to the side plate.

5. Trawl doors according to claim 4, **characterised in that** the fitting (18,118,218) includes a number of fitting apertures (140) that all have the same spacing to the centre of the first bolt (128,218).

6. Trawl doors according to claim 4, **characterised in that** the side plate (124, 126) includes a number of side plate holes (136,138,142) that all have the same spacing to the centre of the first bolt.

7. Trawl doors according to one of claims 1-6, **characterised in that** fitting (18,118,218) is disposed between two side plates (124, 126).

8. Trawl doors according to one of claims 1-3, **characterised in that** the fitting (18,118,218) contains a handle (154,254).

9. A method for depth adjustment of trawl, wherein trawl doors (2,202) together with a trawl are towed after at least one vessel, where the trawl doors (2,202) generate an outwards pull on the trawl relative to the direction of movement of the vessel, whereby the trawl remains open, where the trawl doors (2,202) contain a first set of connecting means (16) for fastening at least one towing wire which is connected with the vessel, where the trawl doors (2,202) contain a second set of connecting means (20,120,220) for fastening at least one wire drawing the trawl, **characterised in that** the trawl doors (2,202) are designed with means (18,118,218) for setting the depth of the trawl, where adjustment of depth is performed at the inner side of the trawl doors (2,202).
